# EUROPEAN PATENT APPLICATION

(11) **EP 2 036 688 A2**
(43) Date of publication of application: **18.03.2009**
(21) Application number: 08252898.5
(22) Date of filing: 01.09.2008
(51) Int. Cl.: B27B 17/14

(54) **Chainsaw**

(30) Priority: 14.09.2007 GB 0718037
(71) Applicant: Husqvarna UK Limited, County Durham, DL5 6UP (GB)
(72) Inventor: Douglas, James Stuart, Darlington, County Durham DL3 9JE (GB)
(74) Representative: Pratt, David Martin

(57) **Abstract**

A chainsaw comprises a main body (1), a guide bar/saw chain assembly (5), and a clamping/tensioning device (5) operatively associated with the guide bar/saw chain assembly in such a manner that operation of the clamping/tensioning device acts to apply a predetermined tension to the saw chain, and then to clamp the guide bar against the main body.

## Description

This invention relates to a chainsaw, and in particular to a chainsaw provided with means for tensioning the saw chain.

A known chainsaw has a main body provided with one or more handles for holding the chainsaw when in use, and a guide bar/saw chain assembly which is detachably fixed to the main body. The main body houses a prime mover (such as an electric motor) drivably connected to a sprocket drive shaft which drivably engages the saw chain via a sprocket drive wheel fixed to the sprocket drive shaft. The guide bar is an elongate, substantially rectangular member having a substantially semicircular free end portions and a guide groove along its outer periphery.

This chainsaw suffers from a number of disadvantages. In particular, it is extremely important that, once assembled, the chain is correctly tensioned, otherwise there is a risk that the chain escapes from the guide groove in the guide bar which could cause serious injury to the user. It is particularly difficult for the average user to tension the chain correctly. Furthermore, the chain and guide bar are user-replaceable items that wear (the chain tends to become blunt, and the guide bar wears). The chain and guide bar do, therefore, require occasional replacement. These parts will also need to be removed for cleaning and maintenance. The known chainsaw is such that removal and replacement of the guide bar and chain is a difficult operation.

Finally, as the chain of the known chainsaw elongates during use due to wear between the links, the user must manually re-tension the chain on a regular basis in order to ensure optimum safety and cutting performance. Manual re-tensioning of the chain of the known chainsaw is not easy, and difficult to explain in an instruction manual. Correct tensioning is a feeling of the tension, and there is no explicit indicator.

An aim of the invention is to provide a chainsaw having means for automatically tensioning the saw chain.

The present invention provides a chainsaw comprising a main body, a guide bar/saw chain assembly, and a clamping/tensioning device operatively associated with the guide bar/saw chain assembly in such a manner that operation of the clamping/tensioning device acts to apply a predetermined tension to the saw chain, and then to clamp the guide bar against the main body.

In this way a single action both tensions the saw chain and clamps the guide bar against the main body.

In a preferred embodiment the clamping/tensioning device comprises a tensioning knob, a tensioning plate fixed to, or integral with, the guide bar, a scroll wheel operatively associated with the tensioning plate so as to convert rotary movement of the scroll wheel into linear movement of the guide bar relative to the main body, and a slip clutch for transferring torque from the tensioning knob to the scroll wheel, the slip clutch being configured to slip at a predetermined torque which is dependent upon the predetermined saw chain tension, whereby initial rotation of the tensioning knob acts to tension the saw chain until the predetermined torque is reached, after which further rotation of the tensioning knob acts to clamp the guide bar against the main body.

Preferably, the scroll wheel is provided with a curved groove which is engageable with a projection extending from the adjacent side of the tensioning plate.

Conveniently, the scroll wheel is provided with an annular collar constituting means for a user to grip and rotate the scroll wheel. Preferably, the external annular surface of the collar is provided with a ribbed configuration.

Advantageously, the slip clutch is constituted by a tolerance ring clutch which surrounds a stub shaft extending from the side of the scroll wheel remote from the tensioning plate. Conveniently, the tolerance ring clutch is constituted by a hollow cylindrical member made of corrugated steel.

The chainsaw may further comprise a slip ring surrounding the tolerance ring clutch, and a splined drive wheel for transferring torque from the tensioning knob to the slip ring via a wrap spring, the splined drive wheel being drivably engageable with complementary splines provided on the tensioning knob.

Preferably, the wrap spring is configured to transfer torque to the slip ring only when the tensioning knob is rotated in the direction tending to tension the saw chain and clamp the guide bar to the main body.

In a preferred embodiment, the chainsaw further comprises a stud extending outwardly of the main body, the free end of the stud being a screw-threaded portion engageable with a complementary screw thread provided in the tensioning knob, the stud passing through apertures in the guide bar and the tensioning plate, through the scroll wheel, the tolerance ring clutch, the slip ring, the wrap spring and the splined drive wheel.

The invention will now be described in greater detail, by way of example, with reference to the drawings, in which:-
Figure 1 is a perspective view of a chainsaw constructed in accordance with the invention;
Figure 2 is a perspective of the chainsaw of Figure 1, with its cover plate, saw chain and tensioning/clamping knob removed; and
Figure 3 is an exploded perspective view of a tensioning and clamping assembly of the chainsaw of Figures 1 and 2;

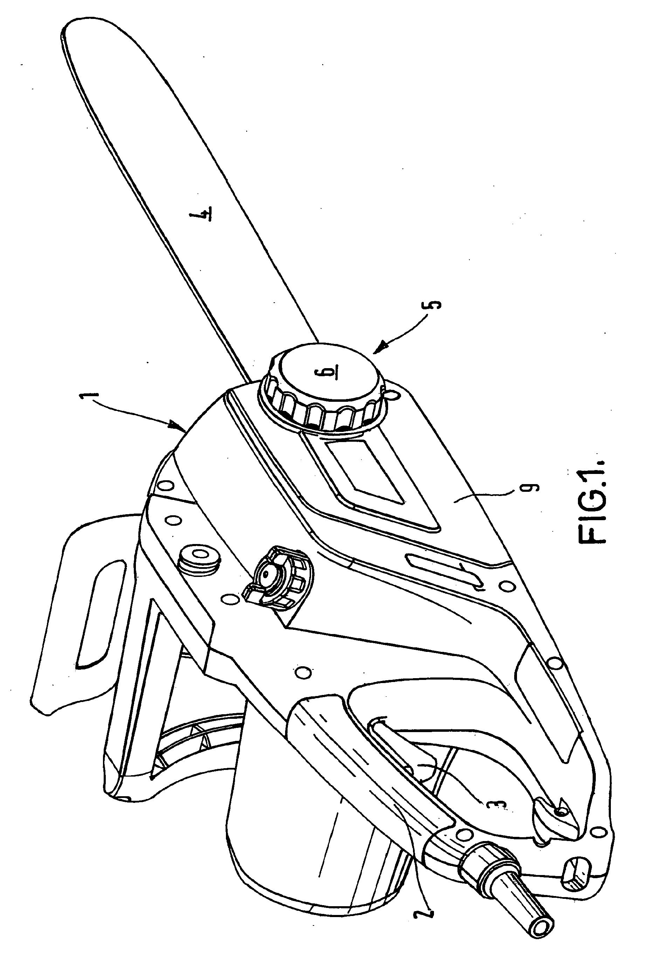

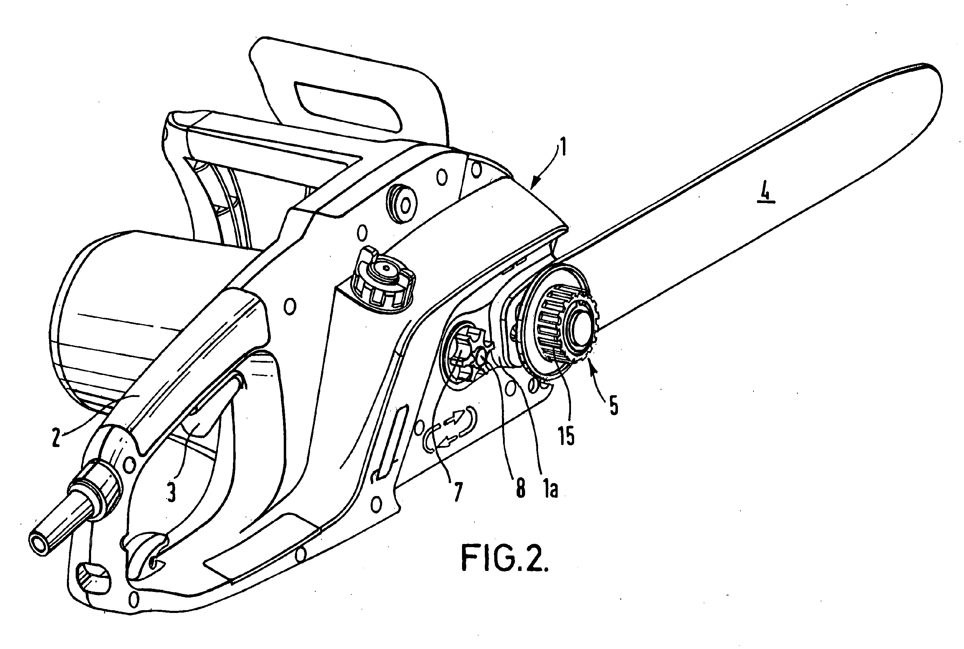

Referring to the drawings, Figure 1 shows a chainsaw having a main body 1 housing an electric motor (not shown). The main body 1 is formed with a handle portion 2 and a trigger switch 3 for turning the motor on and off. A guide bar 4 is attached to the main body 1 by a tensioning and clamping assembly 5 (only a tensioning/clamping knob 6 of which can be seen in Figure 1) provided at one end of the guide bar. A saw chain (not shown) is supported in a peripheral groove (not shown) which extends around the guide bar 4, and is in drivable engagement with a sprocket drive wheel 7 fixed to a sprocket drive shaft 8 (see Figure 2) drivably connected to the electric motor.

In use, the guide bar 4 is clamped against an internal clamping surface 1 a of the main body 1 by the tensioning and clamping assembly 5, as shown in Figure 2, in which a cover plate 9 has been removed to show the clamping surface, the sprocket drive wheel 7 and the sprocket drive shaft 8. The tensioning/clamping knob 6 of the assembly 5 has also been removed in the view shown in Figure 2.

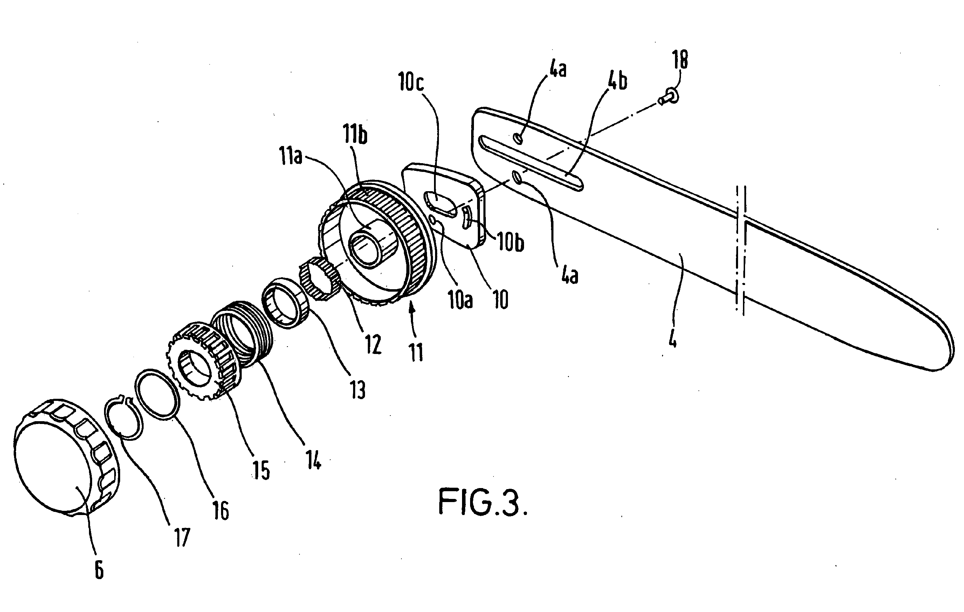

Referring now to Figure 3, a tensioning plate 10 is bolted to the guide bar 4 by means of a bolt 18 passing through one of a pair of apertures 4a provided in the guide bar 4 and into a blind, threaded aperture 10a in the tensioning plate. Two apertures 4a are provided in the guide bar 4, so that the tensioning plate 10 can be fixed thereto with the guide bar either in the position shown, or in an upside down configuration. The tensioning plate 10 is provided with a lug 10b which extends in a direction away from the guide bar 4.

The assembly 5 includes a scroll wheel 11 formed with a spiral groove (not shown) which is engageable with the lug 10b of the tensioning plate 10. A hollow cylindrical projection 11a extends from the other side of the scroll wheel 11. An annular collar 11b is integrally formed with the scroll wheel 11, the outer cylindrical surface of the collar being ribbed. The projection 11a is surrounded by a tolerance ring clutch 12, a slip ring 13, a wrap spring 14 and a splined drive wheel 15. The tensioning/clamping knob 6 is internally splined (not shown) for mating engagement with the splines of the splined drive wheel 15. A washer 16 and a circlip 17 are provided between the splined drive wheel 15 and the tensioning/clamping knob 6. The items 6 and 11 to 17 constitute the assembly 5.

The entire assembly 5 is mounted on a stud (not shown) which is fixed to, and extends outwardly of, the main body 1 of the chainsaw. The stud passes through an elongate aperture 4b in the guide bar 4, through an aperture 10c in the tensioning plate 10, and through the scroll wheel 11, the tolerance ring clutch 12, the slip ring 13, the wrap spring 14, the splined drive wheel 15, the washer 16 and the circlip 17 for screw-threaded engagement with an internal screw thread (not shown) formed in the tensioning/clamping knob 6.

The tensioning and clamping assembly 5 replaces two separate devices which are used with known chainsaws, namely a device for clamping the guide bar to a chainsaw main body, and a device for tensioning the saw chain. Moreover, the assembly 5 is such as automatically to tension the saw chain correctly, thus taking the skill out of the chain tensioning process.

The assembly 5 operates in the following fashion. Rotation of the tensioning/clamping knob 6 rotates the splined drive wheel 15 which in turn rotates the scroll wheel 11 via the wrap spring 14, the slip ring 13 and the tolerance ring clutch 12. Rotation of the scroll wheel 11 is converted into linear movement of the tensioning plate 10, and hence to linear movement of the guide bar 4, thereby tensioning the saw chain. The tolerance ring clutch 12 is configured to slip at a predetermined torque, this torque being dependent upon the correct tension of the saw chain. Thus, when the tension in the saw chain reaches the correct level, the clutch 12 slips, therefore ceasing to transmit any more torque from the tensioning/clamping knob 6 to the guide bar 4. Further rotation of the tensioning/clamping knob 6 then clamps the guide bar 4 firmly against the clamping surface 1 a.

The assembly 5 includes a wrap spring drive constituted by the wrap spring 14 and the slip ring 13. The wrap spring drive provides a one-way drive, that is to say the drive is transmitted via the wrap spring 14 to the slip ring 13 which, in turn, rotates the tolerance ring clutch 12 and hence the scroll wheel 11. This permits tensioning of the chainsaw and subsequent clamping of the guide bar 4 when the tensioning/clamping knob 6 is rotated in a clockwise direction. However, if the knob 6 is rotated in an anticlockwise direction, this rotation is not transmitted to the slip ring 13 from the wrap spring 14, so the scroll wheel 11 is not rotated, resulting in the tension in the saw chain being maintained. Anticlockwise rotation does, however, release the clamping force against the clamping surface 1a, thereby unclamping the guide bar 4 without releasing tension in the saw chain.

The provision of the ribbed annular collar allows a user manually to loosen the chain tension by rotating the scroll wheel 11 in an anti-clockwise direction, after removing or loosening the tensioning/clamping knob 6. Manual loosening of the chain tension is desirable to allow the easy removal of the guide bar 4 and the saw chain from the main body 1.

The wrap spring drive acts in this manner owing to the configuration of the coils of the wrap spring 14. Thus, when the tensioning/clamping knob 6 is rotated in a clockwise direction, this rotation tends to close the coils of the wrap spring 14, so that torque can be transmitted to the slip ring 13. On the other hand, when the tensioning/clamping knob 6 is rotated in an anticlockwise direction, this tends to open the coils of the wrap spring 14, so that torque is not transmitted to the slip ring 13.

The advantage of this wrap spring drive is that, when the saw chain stretches in use, an operator can rotate the tensioning/clamping knob 6 through about half a turn, in an anticlockwise direction, to unclamp the guide bar 4. The tensioning knob 6 can then be rotated in a clockwise direction, to re-tension the saw chain to the correct tension, and thereafter to clamp the guide bar 4 against the clamping surface 1 a.

It will be apparent that modifications could be made to the chainsaw described above. For example, the electric motor could be replaced by any suitable prime mover such as a petrol engine. Where a petrol engine is used, the trigger 3 would constitute means for accelerating or decelerating the petrol engine.

## Claims

1. A chainsaw comprising a main body (1), a guide bar/saw chain assembly, and a clamping/tensioning device (5) operatively associated with the guide bar/saw chain assembly in such a manner that operation of the clamping/tensioning device acts to apply a predetermined tension to the saw chain, and then to clamp the guide bar (4) against the main body.

2. A chainsaw as claimed in claim 1, wherein the clamping/tensioning device (5) comprises a tensioning knob (6), a tensioning plate (10) fixed to, or integral with, the guide bar (4), a scroll wheel (11) operatively associated with the tensioning plate so as to convert rotary movement of the scroll wheel into linear movement of the guide bar relative to the main body (1), and a slip clutch (12) for transferring torque from the tensioning knob to the scroll wheel, the slip clutch being configured to slip at a predetermined torque which is dependent upon the predetermined saw chain tension, whereby initial rotation of the tensioning knob acts to tension the saw chain until the predetermined torque is reached, after which further rotation of the tensioning knob acts to clamp the guide bar against the main body.

3. A chainsaw as claimed in claim 2, wherein the scroll wheel (11) is provided with a curved groove which is engageable with a projection (10b) extending from the adjacent side of the tensioning plate (10).

4. A chainsaw as claimed in claim 2 or claim 3, wherein the scroll wheel (11) is provided with an annular collar (11b) constituting means for a user to grip and rotate the scroll wheel.

5. A chainsaw as claimed in claim 4, wherein the external annular surface of the collar (11b) is provided with a ribbed configuration.

6. A chainsaw as claimed in any one of claims 2 to 5, wherein the slip clutch is constituted by a tolerance ring clutch (12) which surrounds a stub shaft (11c) extending from the side of the scroll wheel (11) remote from the tensioning plate (10).

7. A chainsaw as claimed in claim 6, wherein the tolerance ring clutch (12) is constituted by a hollow cylindrical member made of corrugated steel.

8. A chainsaw as claimed in claim 7, further comprising a slip ring (13) surrounding the tolerance ring clutch (12), and a splined drive wheel (15) for transferring torque from the tensioning knob (6) to the slip ring (13) via a wrap spring (14), the splined drive wheel being drivably engageable with complementary splines provided on the tensioning knob.

9. A chainsaw as claimed in claim 8, wherein the wrap spring (14) is configured to transfer torque to the slip ring (13) only when the tensioning knob (6) is rotated in the direction tending to tension the saw chain and clamp the guide bar (4) to the main body (1).

10. A chainsaw as claimed in claim 8 of claim 9, further comprising a stud extending outwardly of the main body (1), the free end of the stud being a screw-threaded portion engageable with a complementary screw thread provided in the tensioning knob (6), the stud passing through apertures (4b, 10c) in the guide bar (4) and the tensioning plate (10), through the scroll wheel (11), the tolerance ring clutch (12), the slip ring (13), the wrap spring (14) and the splined drive wheel (15).
